# EUROPEAN PATENT SPECIFICATION

(11) **EP 4 498 852 B1**
(45) Date of publication and mention of the grant of the patent: **18.11.2026**
(21) Application number: 23715445.5
(22) Date of filing: 23.03.2023
(51) Int. Cl.: A24F 40/85, A24F 40/20

(54) **CLEANING TOOL FOR CLEANING AN AEROSOL PROVISION DEVICE**
REINIGUNGSWERKZEUG ZUM REINIGEN EINER AEROSOLBEREITSTELLUNGSVORRICHTUNG
OUTIL DE NETTOYAGE POUR NETTOYER UN DISPOSITIF DE FOURNITURE D'AÉROSOL

(30) Priority: 25.03.2022 GB 202204265
(43) Date of publication of application: 05.02.2025
(73) Proprietor: Nicoventures Trading Limited, London WC2R 3LA (GB)
(72) Inventor: BURGESS, Jonathon, London WC2R 3LA (GB)
(74) Representative: Dehns
(86) International application number: PCT/EP2023/057516
(87) International publication number: WO 2023/180464

(56) References cited:
- WO-A1-2020/193177
- WO-A1-2021/182720
- WO-A1-2021/214635
- JP-U- 3 215 374

## Description

### TECHNICAL FIELD

The present invention relates to a cleaning tool for cleaning an aerosol provision device, a method of cleaning an aerosol provision device and an aerosol provision system.

### BACKGROUND

Smoking articles such as cigarettes, cigars and the like burn tobacco during use to create tobacco smoke. Attempts have been made to provide alternatives to these articles by creating products that release compounds without combusting. Examples of such products are so-called "heat not burn" products or tobacco heating devices or products, which release compounds by heating, but not burning, material. The material may be, for example, tobacco or other non-tobacco products, which may or may not contain nicotine.

Aerosol provision systems, which cover the aforementioned devices or products, are known. Common systems use heaters to create an aerosol from a suitable medium which is then inhaled by a user. Often the medium used needs to be replaced or changed to provide a different aerosol for inhalation.

A problem with known aerosol provision devices is that they can become dirty and may need to be cleaned.

WO 2020/193177 A1 discloses a prior art a smoking substitute system comprising a device, an aerosol-forming article and a tool. JP 3215374 U discloses a prior art cleaning tool for smoking equipment. WO 2021/182720 A1 discloses a prior art cleaning kit for an aerosol provision device. WO 2021/214635 A1 discloses a prior art cleaning tool for an aerosol-generating device.

### SUMMARY

According to an aspect of the invention there is provided an aerosol provision device system as claimed in claim 1.

The cleaning tool according to various embodiments enables a user to open and remove or displace a cover which may be provided, for example, at the distal end of an aerosol provision device thereby exposing an opening which may lead into a heating chamber of the aerosol provision device. A different portion of the cleaning tool which includes a support with a plurality of bristles or pads depending or extending therefrom can then be used to clean inside the heating chamber of the aerosol provision device. The cleaning tool avoids a user attempting to clean the aerosol provision device using their finger and hence avoids a user inadvertently burning their finger.

Optionally, the support is formed from at least two strands of wire which are twisted together in order to secure the plurality of bristles or pads in position.

Optionally, the plurality of bristles or pads extend radially from the support.

Optionally, the support is straight, bent or curved.

Optionally, the handle portion of the first part comprises an external thread and the housing of the second part comprises a complimentary internal thread for securing the first and second parts together in a storage configuration.

It will be understood that whilst the first part and the second part may be fitted together for storage, the first part may be used separately from the second part for cleaning purposes.

Optionally, the housing of the second part houses at least a portion of the first part in a storage configuration.

Optionally, the engagement mechanism enables a cover of an aerosol provision device to be rotated or displaced.

Optionally, the engagement mechanism comprises a first protrusion for engaging with a first slot or cut-out provided in a cover of an aerosol provision device.

Optionally, the engagement mechanism further comprises a second protrusion having a different shape and/or dimension to the first protrusion, wherein the second protrusion is arranged to engage with a second slot or cut-out provided in the aerosol provision device, wherein the second slot or cut-out has a different shape and/or dimension to the first slot or cut-out.

Optionally, the handle portion of the first part further comprises a shoulder for resting in an aperture of an aerosol provision device when a cover has been removed or displaced by the engagement mechanism.

Optionally, the plurality of bristles comprise PEEK.

Optionally, the support comprises stainless steel.

Optionally, the cleaning tool further comprises a third part, the third part comprising a handle having a screw member dependent or extending therefrom for removing an aerosol generating article from an aerosol provision device.

Optionally, the screw member comprises stainless steel.

Optionally, the housing of the second part is further configured to receive the third part in a storage configuration.

Optionally, the housing of the second part houses at least a portion of the third part in a storage configuration.

It will be understood that whilst the third part and the second part may be fitted together for storage, the third part may be used separately from the second part for cleaning purposes.

According to another aspect there is provided a method of cleaning an aerosol provision device as claimed in claim 14.

Optionally, the method further comprises moving the handle portion of the first part between the first and second positions a plurality of times.

Optionally, the method further comprises rotating the handle portion of the first part about the longitudinal axis of the aerosol provision device by at least a partial rotation.

### BRIEF DESCRIPTION OF THE DRAWINGS

Various embodiments will now be described, by way of example only, and with reference to the accompanying drawings in which:
Fig. 1 shows a front view of an aerosol provision device of a type which may be cleaned by a cleaning tool according to various embodiments;
Fig. 2 shows a perspective side view of the aerosol provision device shown in Fig. 1 and shows an outer cover at a distal end of the aerosol provision device, wherein an engagement mechanism provided on the cleaning tool is arranged to engage with the outer cover in order to remove or displace the cover;
Fig. 3 shows a schematic side view of an aerosol generator portion of the aerosol provision device shown in Fig. 1 and shows an opening provided in a distal end which provides access for a cleaning tool;
Fig. 4 shows a partial plan view of the base of the aerosol provision device shown in Fig. 1 and shows a tool slot for receiving an engagement mechanism of a cleaning tool in order to remove or displace a cover provided in the base of the aerosol provision device;
Fig. 5 shows a schematic side view of a cleaning tool for cleaning an aerosol provision device according to various embodiments, wherein the cleaning tool comprises:
   (i) a first part having a handle portion, a support and a plurality of bristles depending or extending from a distal end of the support; (ii) a second part having a housing for receiving the first part and wherein the housing comprises an engagement mechanism for engaging with a cover of an aerosol provision device in order to remove or displace the cover; and optionally (iii) a third part comprising a handle having a screw member dependent or extending therefrom for removing an aerosol generating article from an aerosol provision device; and

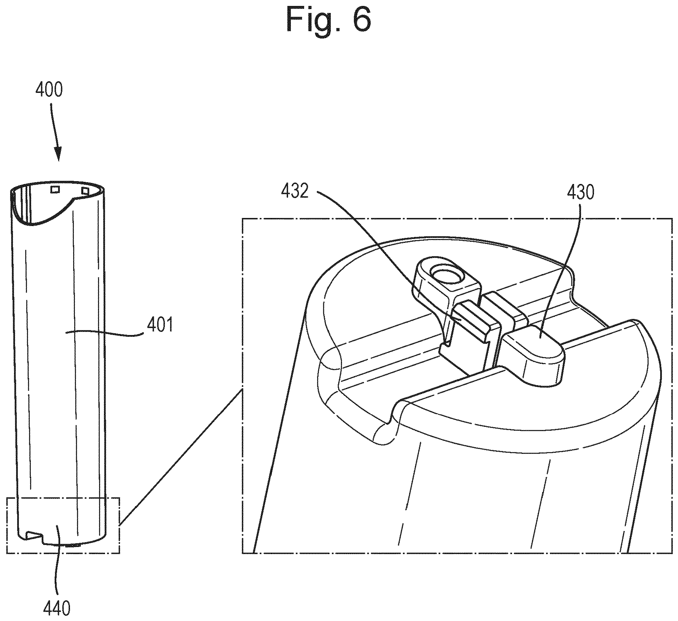

Fig. 6 shows a view of a distal end of the cleaning tool according to various embodiments and shows in greater detail an engagement mechanism provide on a distal end of the housing which is arranged to engage with a cover of an aerosol provision device in order to remove or displace the cover.

### DETAILED DESCRIPTION

As used herein, the term "aerosol-generating material" is a material that is capable of generating aerosol, for example when heated, irradiated or energized in any other way. Aerosol-generating material may, for example, be in the form of a solid, liquid or gel which may or may not contain an active substance and/or flavourants. Aerosol-generating material may include any plant based material, such as tobacco-containing material and may, for example, include one or more of tobacco, tobacco derivatives, expanded tobacco, reconstituted tobacco or tobacco substitutes. Aerosol-generating material also may include other, non-tobacco, products, which, depending on the product, may or may not contain nicotine. Aerosol-generating material may for example be in the form of a solid, a liquid, a gel, a wax or the like. Aerosol-generating material may for example also be a combination or a blend of materials. Aerosol-generating material may also be known as "smokable material".

The aerosol-generating material may comprise a binder and an aerosol former. Optionally, an active and/or filler may also be present. Optionally, a solvent, such as water, is also present and one or more other components of the aerosol-generating material may or may not be soluble in the solvent. In some embodiments, the aerosol-generating material is substantially free from botanical material. In some embodiments, the aerosol-generating material is substantially tobacco free.

The aerosol-generating material may comprise an aerosol-generating film. The aerosol-generating film may comprise or be a sheet, which may optionally be shredded to form a shredded sheet. The aerosol-generating sheet or shredded sheet may be substantially tobacco free.

According to the present disclosure, a "non-combustible" aerosol provision system is one where a constituent aerosol-generating material of the aerosol provision system (or component thereof) is not combusted or burned in order to facilitate delivery of at least one substance to a user.

In some embodiments, the delivery system is a non-combustible aerosol provision system, such as a powered non-combustible aerosol provision system.

In some embodiments, the non-combustible aerosol provision system is an electronic cigarette, also known as a vaping device or electronic nicotine delivery system (END), although it is noted that the presence of nicotine in the aerosol-generating material is not a requirement.

In some embodiments, the non-combustible aerosol provision system is an aerosol-generating material heating system, also known as a heat-not-burn system. An example of such a system is a tobacco heating system.

In some embodiments, the non-combustible aerosol provision system is a hybrid system to generate aerosol using a combination of aerosol-generating materials, one or a plurality of which may be heated. Each of the aerosol-generating materials may be, for example, in the form of a solid, liquid or gel and may or may not contain nicotine. In some embodiments, the hybrid system comprises a liquid or gel aerosol-generating material and a solid aerosol-generating material. The solid aerosol-generating material may comprise, for example, tobacco or a non-tobacco product.

Typically, the non-combustible aerosol provision system may comprise a non-combustible aerosol provision device and a consumable for use with the non-combustible aerosol provision device.

In some embodiments, the disclosure relates to consumables comprising aerosol-generating material and configured to be used with non-combustible aerosol provision devices. These consumables are sometimes referred to as articles throughout the disclosure.

In some embodiments, the non-combustible aerosol provision system, such as a non-combustible aerosol provision device thereof, may comprise a power source and a controller. The power source may, for example, be an electric power source or an exothermic power source. In some embodiments, the exothermic power source comprises a carbon substrate which may be energised so as to distribute power in the form of heat to an aerosol-generating material or to a heat transfer material in proximity to the exothermic power source.

In some embodiments, the non-combustible aerosol provision system may comprise an area for receiving the consumable, an aerosol generator, an aerosol generation area, a housing, a mouthpiece, a filter and/or an aerosol-modifying agent.

In some embodiments, the consumable for use with the non-combustible aerosol provision device may comprise aerosol-generating material, an aerosol-generating material storage area, an aerosol-generating material transfer component, an aerosol generator, an aerosol generation area, a housing, a wrapper, a filter, a mouthpiece, and/or an aerosol-modifying agent.

An aerosol generating device can receive an article comprising aerosol generating material for heating. An "article" in this context is a component that includes or contains in use the aerosol generating material, which is heated to volatilise the aerosol generating material, and optionally other components in use. A user may insert the article into the aerosol generating device before it is heated to produce an aerosol, which the user subsequently inhales. The article may be, for example, of a predetermined or specific size that is configured to be placed within a heating chamber of the device which is sized to receive the article.

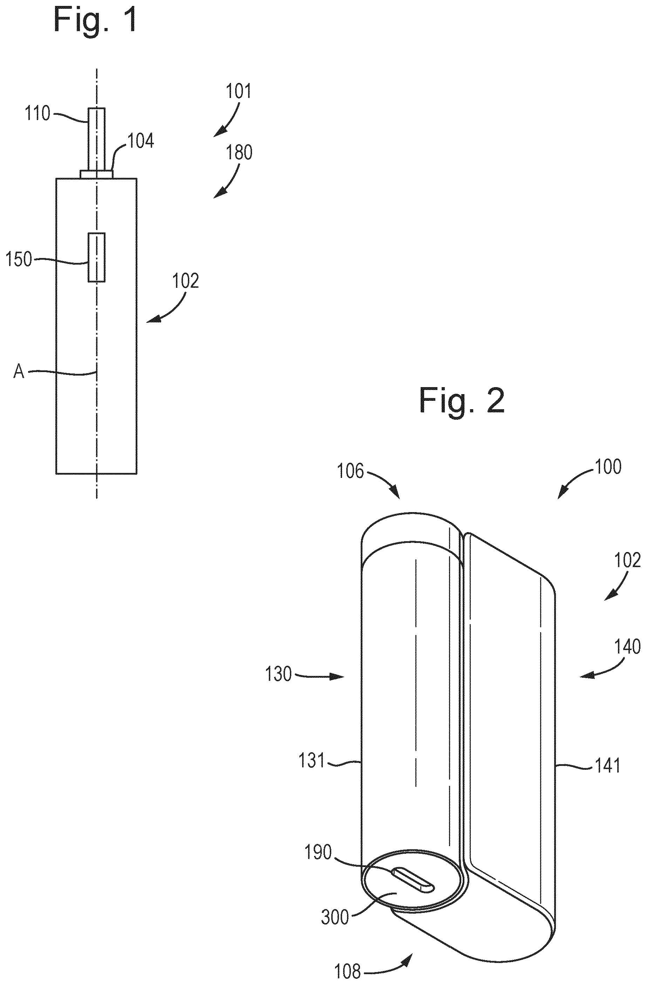

Fig. 1 shows for illustrative purposes an aerosol provision device 100 for generating aerosol from an article 110 comprising aerosol generating material which has been inserted into the aerosol provision device 100. The aerosol provision device 100 may be used to heat an article 110 comprising aerosol generating material in order to generate an aerosol or other inhalable medium which is inhaled by a user of the aerosol provision device 100. At the end of a session of use a spent article 110 may be removed from the aerosol provision device 100.

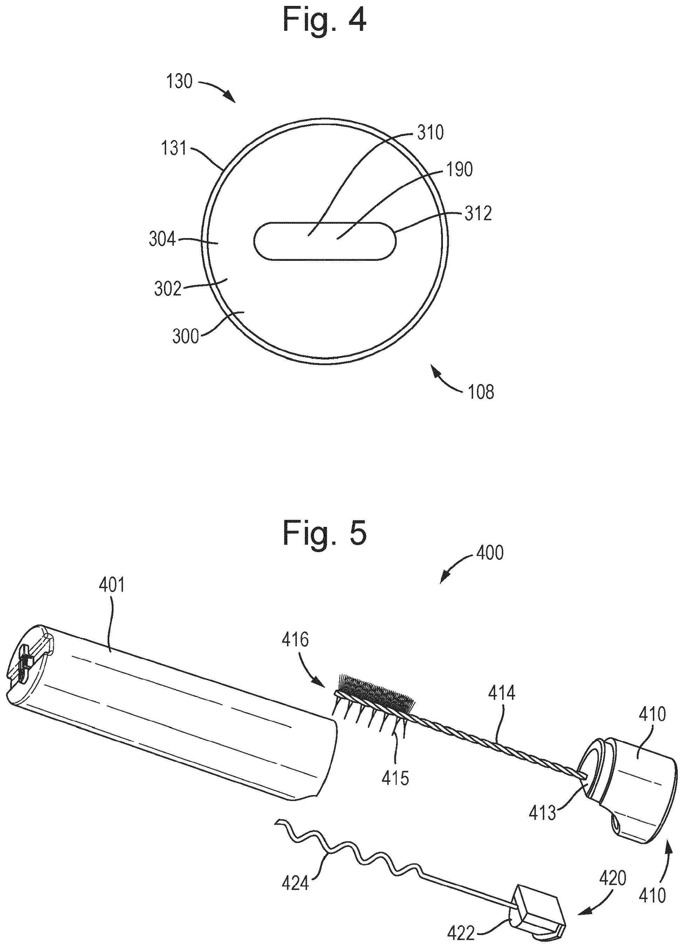

As will be discussed in more detail below, particularly with reference to Figs. 5 and 6, according to various embodiments a cleaning tool for cleaning the aerosol provision device 100 is disclosed. The cleaning tool comprises a first part which includes bristles for cleaning an internal portion of the aerosol provision device 100 and a second part comprising a housing for receiving the first part. Furthermore, the housing includes an engagement mechanism for engaging with a cover of the aerosol provision device 100 in order to remove or displace the cover. As will be described in more detail below, the cover may be provided at a distal end of the aerosol provision device 100 and removal or displacement of the cover enables the first part of the cleaning tool to be inserted into the aerosol provision device 100 in order to clean a heating chamber located within the aerosol provision device.

The aerosol provision device 100 comprises a body 102. A housing arrangement surrounds and houses various components of the body 102. An article aperture 104 is formed at one end of the body 102 through which an article 110 may be inserted for heating by an aerosol generator (not shown) located within the aerosol provision device 100. The article 110 may be fully or partially inserted into the aerosol generator where the article 110 may be heated by one or more components of the aerosol generator. The article 110 and the aerosol provision device 100 together form an aerosol provision system 101.

The aerosol provision device 100 may also include a user-operable control element 150, such as a button or switch, which controls or operates components of the aerosol provision device 100 when pressed or otherwise activated. For example, a user may turn the aerosol provision device 100 ON by operating the control element 150. The aerosol generator defines a longitudinal axis A.

Fig. 2 shows a perspective view of the aerosol provision device 100. The aerosol provision device 100 may comprise a first body assembly 130 and a second body assembly 140. The first body assembly 130 may comprises an aerosol generator.

The first body assembly 130 comprises a first housing 131. The second body assembly 140 comprises a second housing 141. The first and second body assemblies 130,140 may be fixedly mounted. The first and second body assemblies 130,140 may together form the body 102.

The body 102 has end surfaces of the aerosol provision device 100. The end of the aerosol provision device 100 closest to the article aperture may be known as the proximal end (or mouth end) 106 of the aerosol provision device 100 because, in use, it is closest to the mouth of the user. In use, a user inserts an article into the aperture, operates the aerosol generator to begin heating the aerosol generating material and draws on the aerosol generated in the aerosol provision device 100. This causes the aerosol to flow through the aerosol provision device 100 along a flow path towards the proximal end 106 of the aerosol provision device 100.

The other end of the device furthest away from the aperture may be known as the distal end 108 of the aerosol provision device 100 because, in use, it is the end furthest away from the mouth of the user. As a user draws on the aerosol generated in the aerosol provision device 100, the aerosol flows in a direction towards the proximal end 106 of the aerosol provision device 100. The terms proximal and distal as applied to features of the aerosol provision device 100 will be described by reference to the relative positioning of such features with respect to each other in a proximal-distal direction along the longitudinal axis.

As used herein, a one-piece component refers to a component of a device which is not separable by a user into two or more components following assembly of the device. Integrally formed relates to two or more features that are formed into a one piece component during a manufacturing stage of the component.

An air flow passage extends through the body 102 and extends to an opening 190. The opening 190 acts as an air inlet. An outer cover 300 covers the opening 190. The outer cover 300 may be arranged to allow the flow of air into the air flow passage. The outer cover 300 may comprise a clean out door to aid with cleaning. The clean out door may be removable from the aerosol provision device 100 thereby providing access to a cleanout chamber within the aerosol provision device 100.

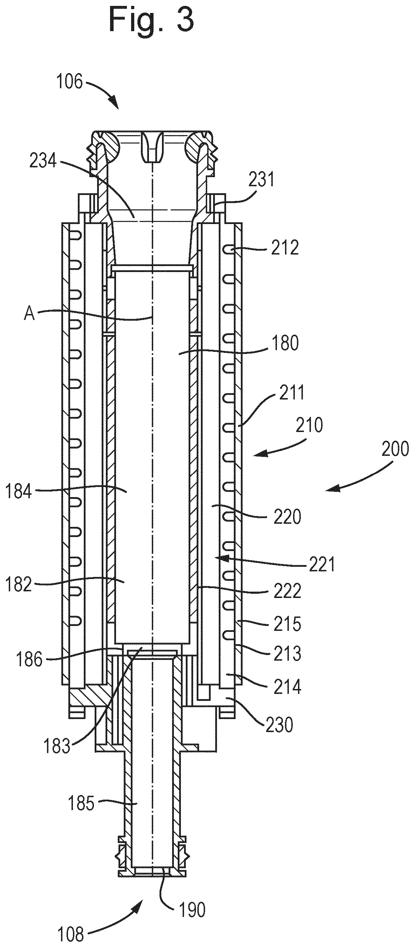

Fig. 3 shows a cross-sectional view of an aerosol generator 200 which forms part of the aerosol provision device. In one example, the aerosol generator 200 may comprise an induction-type heating system, including a magnetic field generator 210. The magnetic field generator 210 comprises an inductor coil assembly 211. The aerosol generator 200 also comprises a heating element or susceptor 220.

A susceptor is a material that is heatable by penetration with a varying magnetic field, such as an alternating magnetic field. The susceptor may be an electrically-conductive material, so that penetration thereof with a varying magnetic field causes induction heating of the heating material. The heating material may be magnetic material, so that penetration thereof with a varying magnetic field causes magnetic hysteresis heating of the heating material. The susceptor may be both electrically-conductive and magnetic, so that the susceptor is heatable by both heating mechanisms. The device that is configured to generate the varying magnetic field is referred to as a magnetic field generator, herein.

The aerosol generator 200 may comprise an inductive heating assembly and may comprise various components to heat aerosol generating material provided on an article via an inductive heating process. Induction heating is a process of heating an electrically conducting object (such as a susceptor) by electromagnetic induction.

The inductor coil assembly 211 may comprise a first inductor coil 212 and a second inductor coil 213. Alternatively, a single inductor coil may be provided. The inductor coil assembly 211 may comprise a coil support 214 which may be tubular. The coil support 214 may comprise a guide 215 for the first inductor coil 212 and the second inductor coil 213. The guide 215 may comprise a channel on an outer side of the coil support 214.

The heating element or susceptor 220 may form part of a heating assembly 221. The heating element or susceptor 220 may be hollow and may define at least part of a receptacle 222 within which aerosol generating material may be received in use. For example, an article may be inserted into the aerosol generator 200 so as to be in close proximity to the heating element or susceptor 220. The heating element or susceptor 220 may be tubular and may have a circular cross section. The heating element or susceptor 220 may have a generally constant diameter along its axial length.

The heating element or susceptor 220 may be formed from an electrically conducting material suitable for heating by electromagnetic induction. For example, the heating element or susceptor 220 may comprise a carbon steel. It will be understood that other suitable materials may be used, for example a ferromagnetic material such as iron, nickel or cobalt.

Other arrangements are contemplated wherein a heating element may be provided which is heatable by electrical resistance. The aerosol generator 200 may therefore comprise electrical contacts for electrical connection with the apparatus for electrically activating the heating element by passing a flow of electrical energy through the heating element.

The receptacle 222 and an associated article may be dimensioned so that the article is received adjacent the heating element or susceptor 220. This helps ensure that the heating is most efficient. The article may comprise aerosol generating material. The aerosol generating material may be positioned within the receptacle 222. The article may comprise other components such as a filter, wrapping materials and/or a cooling structure.

A first end support 230 may be provided which supports the heating element or susceptor 220. The first end support 230 may support the heating element or susceptor 220 at a first, distal, end. A second end support 231 may be provided which supports the heating element or susceptor 220 at a second, proximal, end. The first and second end supports 230,231 may act as receptacle supports.

An air flow passage 180 is provided which extends within the heating element or susceptor 220. The air flow passage 180 may extend to a first, distal, end. The air flow passage 180 may protrude beyond the heating element or susceptor 220. The air flow passage 180 may extend from the heating element or susceptor 220 and may be defined by a flow path member 182.

The flow path member 182 extends between the heating element or susceptor 220 and an opening 190 at a distal end 108. The flow path member 182 may be tubular and the flow path member 182 may define a bore. The flow path member 182 may extend in an axial direction along its length.

The flow path member 182 and the heating element or susceptor 220 may intersect at a juncture 183. The flow path member 182 may comprise a first section 184 having a first diameter and a second section 185 having a second diameter. The diameter of the first section 184 may be greater than the diameter of the second section 185. An intermediate section 186 may extend between the first and second sections 184,185. The intermediate section 186 may form a shoulder which may act as a stop to limit insertion of an article.

A fluid seal at the juncture 183 may be formed by a mechanical fabricated joint such as a weld. A fluid seal at the juncture 183 may be alternatively be formed by a laser weld process. It will be understood that other methods may be used such as brazing and adhering. The flow path member 182 may be formed from a thermally conductive material. It is contemplated that the flow path member 182 may be formed from a carbon steel. The flow path member 182 may be formed from the same material as the heating element or susceptor 220. By such processes the heating element or susceptor 220 and the flow path member 182 may be fabricated as a one-piece component.

The heating element or susceptor 220 may be abutted to the flow path member 182 thereby providing for heat transfer by conduction. As such, it is possible to aid passive heating of the flow path member 182.

The second end support 231 may define an insertion chamber 234 at the proximal end 106. The insertion chamber 234 may be configured to receive an article therethrough.

The heating element or susceptor 220 may extend between the first and second end supports 230,231. A barrier member may extend between the first end support 231 and the second end support 232.

Fig. 4 shows a partial plan view of the base of an aerosol provision device according to an arrangement. The first body assembly 130 may be generally tubular. The first housing 131 may be tubular. The first housing 131 may have a circular cross-section. An outer cover 300 is disposed at the distal end 108 of the first housing 131. The outer cover 300 covers the opening 190 at the distal end 108 of the first housing 131. When disposed in the first housing 131, the outer cover 300 may be flush with the distal end 108 of the first housing 131. The outer cover 300 comprises a cover member 302. The cover member 302 has a first side 304 and a second side.

It will be understood that according to other arrangements the housing on which an outer cover is mounted may be non-tubular.

A cavity is provided at the distal end of the body and the cavity has an opening 190. The cavity is configured to receive a cover member 302. The cavity may have a depth generally corresponding to the thickness of the cover member 302.

The cover member 302 may be configured to be inserted into the opening 190. The cover member 302 and the cavity may have corresponding cross-sections. The cover member 302 may have a circular cross-sectional shape. An annular wall may be provided which connects the first side 304 of the cover member 302 to the second side. The annular wall may be configured to engage the first housing 131 either by an interference fit or by a threaded connection.

The first side 304 of the cover member 302 may comprise a tool receiving recess 310. The tool receiving recess 310 may be configured to receive a portion of a cleaning tool (not shown). In particular, the tool receiving recess 310 may be configured to receive an engagement mechanism of a cleaning tool. The cleaning tool will be described in more detail below with reference to Figs. 5 and 6.

The cleaning tool may be configured so that an engagement mechanism of the cleaning tool is inserted in use into the tool receiving recess 310. The engagement mechanism may be arranged to remove or displace the outer cover 300 from the opening 190 thereby enabling access for a cleaning tool to be inserted into the opening 190. The tool receiving recess 310 may have a tool slot 312. The tool slot 312 may comprise an aperture configured to receive an engagement mechanism provided on the cleaning tool. The tool slot 312 may be elongate. The tool slot 312 and the engagement mechanism of the cleaning tool may have complimentary geometries.

The tool slot 312 may be disposed centrally on the first side 304 of the cover member 302. The tool slot 312 may be disposed centrally on the first side 304. However, other arrangements are contemplated wherein the geometry and location of the tool slot 312 may differ from the arrangement shown in Fig. 4. For example, the tool slot 312 may have a different shape and may be displaced from the centre of the cover member 302.

Fig. 5 shows a schematic side view of a cleaning tool 400 for use with an aerosol provision device according to various embodiments. In particular, the cleaning tool 400 may be used to clean an aerosol provision device 100 of the type as described above with reference to Figs. 1-4.

The cleaning tool 400 comprises a first part comprising a brush holder 410 which is insertable into a second part comprising a housing 401. The cleaning tool 400 may further comprise a third part 420 which comprises a screw 424 having a screw handle 422. The third part 420 may be used to remove an article or a portion of an article which has become stuck in the aerosol provision device.

The brush holder 410 may comprises a brush holder chassis which can be inserted into the housing 401. The brush holder chassis may be retained in the housing 401 by an interference fit. According to other arrangements the brush holder chassis may be externally threaded and the housing 401 may comprise a complimentary internal thread into which the brush holder chassis can be screwed into. The respective thread may have a single turn which may extend along the entire annular wall of the housing 401 and the entire annular outer surface of the brush holder chassis. Other arrangements are contemplated wherein the thread(s) may not extend all the way around the housing 401 or the brush holder chassis. It will be appreciated that the number of turns of the respective thread may differ. The respective thread may comprise less than one turn, for example a quarter of a turn, or half a turn. The respective thread may comprise two or more turns. The two or more turns may be axially offset from each another. The two or more turns may each extend the entire annular extent of the annular inner surface of the housing 401 or the annular outer surface of the brush holder chassis.

The housing 401 of the cleaning tool 400 may be formed of a polycarbonate such as MAKROLON 2805 (RTM). A support or shaft 414 may be connected to the brush holder chassis and the support or shaft 414 may project away from a brush holder housing 413 which is attached to the brush holder chassis. The brush holder housing 413 may be formed from a co-polymer such as POM M90-44 (RTM). The brush holder chassis may be formed from a polycarbonate such as MAKROLON 2805 (RTM).

The support or shaft 414 may comprise stainless steel (such as stainless steel type 304) or an alternative material such as a plastics material. The support or shaft 414 may be attached to the brush holder chassis by glue or a hot melt connect. The material comprising the support or shaft 414 may be selected such that the support or shaft 414 can be bent into a number of different orientations as desired.

At a distal end 416 of the support or shaft 414 a plurality of bristles 415 may be disposed. The bristles 415 may be formed from polyetheretherketone (PEEK) such as ZYPEEK 770G (RTM). It has been found that PEEK is particularly suited for clean out operations due to its beneficial material properties. For example, PEEK has a high melting point in the range of 250 °C to 345 °C, which may be above the temperature of an aerosol provision device after it has completed a heating operation. The bristles 415 may be conveniently cut to size. According to an arrangement the bristles 415 may tapered in a direction from a first end closest to the brush holder housing 413 connected to the brush holder chassis to the distal end 416. For example, the bristles 415 closest to the brush holder housing 413 of the brush holder chassis may extend a first radial distance and the bristles 415 at the distal end 416 of the support or shaft 414 may extend a second radial desistance, wherein the first radial distance may be greater than the second radial distance, or vice versa.

According to various arrangements the bristles 415 may have a thickness of 0.1-0.3 mm. According to arrangements the bristles may have a thickness of 0.1-0.2 mm or 0.2-0.3 mm.

The bristles 415 may be inserted into the support or shaft 414 and then trimmed to a desired length. The support or shaft 414 may then be inserted into the brush holder chassis and then optionally be bent into any suitable orientation.

The cleaning tool 400 may be used to clean an aerosol provision device such as an aerosol provision device as shown and described above with reference to Figs. 1-4. In order to use the cleaning tool 400, a user could remove the brush holder chassis from the housing 401 and then insert the distal end 416 through the opening 190 of the aerosol provision device 100 with the end cover 300 removed (see Fig. 2). The user would then be free to insert the cleaning tool into a receptacle 222 of the aerosol provision device 100 (see Fig. 3) when no article is present in the receptacle 222. The user may then move the cleaning tool 400 in different orientations so that the plurality of bristles 415 remove any lose debris collected in the bottom of the receptacle 222.

The brush holder housing 413 connected to the brush holder chassis may comprise a shoulder around its rim for engaging with an outer surface of the opening 190 thereby preventing stress to internal components, when using the cleaning tool 400 to clean the aerosol provision device 100. Other arrangements are contemplated wherein the brush holder housing 413 does not have a defined shoulder.

The bristles 415 of the cleaning tool 400 may be used to scrub the inner walls of the receptacle 222 (see Fig. 3) in order to remove any material that has adhered to the inner surface of the receptacle 222. The bristles 415 may also advantageously be used to clean the heating element or susceptor 220 without damaging the heating element or susceptor 220. If the cleaning tool 400 were not provided, a user might attempt to clean the inside of the receptacle 222 with their fingers or a blunt object which might cause damage to internal components within the aerosol provision device 100. In should also be understood that if a spent article were removed shortly after use, then the inside of the aerosol provision device 100 may be at a relatively high temperature. Accordingly, the use of the cleaning tool 400 prevents a user from burning themselves if they attempted to clean the aerosol provision device 100 without the cleaning tool 400.

According to various arrangements the support or shaft 414 may comprise two twisted wires which may be arranged so as to secure the plurality of bristles 415 in place relative to support or shaft 414. The support or shaft 414 may have any other suitable form. In the arrangement shown in Fig. 5 the support or shaft 414 is straight. However, it will be appreciated that the support or shaft 414 may have any other suitable profile that facilitates cleaning of the heating element or susceptor 220 and/or the inner walls of the receptacle 222 within the aerosol provision device 100.

In the arrangement shown in Fig. 5, the plurality of bristles 415 are shown extending radially away from the support or shaft 414. Whilst a specific form of brush is depicted, i.e. one which comprises bristles 415, it will be appreciated that a brush may be provided which comprises any suitable element which will contact a part of the aerosol provision device during use of the cleaning tool 400. For example, the brushes may comprise a series of blades or pads which perform a cleaning action.

Also shown in Fig. 5 is an optional article remover tool 420 comprising a handle or base portion 422 and a screw 424 projecting from the handle or base portion 422. The handle or base portion 422 may be shaped such that it can be held in or docked to the brush holder chassis of the brush holder 410. In use, the screw end 424 can be screwed into an article which may stuck in the aerosol provision device in order to remove the article. The screw 424 may be formed of stainless steel (304), although other materials are contemplated. According to an arrangement the screw 424 may have an outer diameter of 3.5 mm and a pitch of 7.2 mm. The wire forming the screw 424 may have a diameter of 1 mm. The handle or base portion 422 may comprise a polycarbonate such as MAKROLON 2805 (RTM).

Fig. 6 shows in more detail a distal end 440 of the housing 401 of the cleaning tool 400. The housing 401 further comprises an engagement feature 430 for engaging with a cover of an aerosol provision device, such as the outer cover 300 of the aerosol provision device 100 shown and described above for example with reference to Fig. 2. The engagement feature 430 may be arranged to open, remove or displace the outer cover 300.

The engagement feature 430 may protrude from the housing 401 and may comprise a plurality of hooks 432 for engagement with a corresponding recess(es) of a tool slot 312 provided on the outer cover 300 (see Fig. 4) thereby acting to secure the cleaning tool 400 to the outer cover 300 of the aerosol provision device. The tool slot 312 and the engagement feature 430 may be arranged to have complimentary geometries. The engagement feature 430 may be disposed centrally on the distal end 440 of the cleaning tool 400 and may be elongate. According to other arrangements the geometry and location of the tool slot 312 may differ.

In use, a user may insert the engagement feature 430 into the tool slot 312 of the outer cover 300 in order to form a secure connection. The user may then rotate or pull the engagement feature 430 in order to remove or displace the outer cover 300 thereby exposing the opening 190 for subsequent cleaning by the cleaning tool 400. The engagement feature 430 may be configured to aid in inserting and removing (or displacing) an outer cover 300 in order to provide access via an opening 190 in order to facilitate cleaning of an internal portion of the aerosol provision device.

The various embodiments described herein are presented only to assist in understanding and teaching the claimed features. These embodiments are provided as a representative sample of embodiments only, and are not exhaustive and/or exclusive. It is to be understood that advantages, embodiments, examples, functions, features, structures, and/or other aspects described herein are not to be considered limitations on the scope of the invention as defined by the claims, and that other embodiments may be utilised and modifications may be made without departing from the scope of the claimed invention. Various embodiments of the invention may suitably comprise, consist of, or consist essentially of, appropriate combinations of the disclosed elements, components, features, parts, steps, means, etc, other than those specifically described herein.

## Claims

1. An aerosol provision system (101) comprising:
an aerosol provision device (100) comprising a cover (300); and
a cleaning tool (400) for cleaning an aerosol provision device (100), the cleaning tool (400) comprising:
a first part comprising a handle portion (410) having a support (414) depending or extending therefrom and a plurality of bristles or pads (415) depending or extending from a distal end (416) of the support (414); and
a second part comprising a housing (401) for receiving the first part, **characterised in that**:
the housing (401) further comprises an engagement mechanism (430) for engaging with the cover (300) of the aerosol provision device (100) in order to remove or displace the cover (300); and
the engagement mechanism (430) of the second part of the cleaning tool (400) is arranged to engage the cover (300) in use in order to remove or displace the cover (300).

2. An aerosol provision system (101) as claimed in claim 1, wherein the support (414) is formed from at least two strands of wire which are twisted together in order to secure the plurality of bristles or pads (415) in position.

3. An aerosol provision system (101) as claimed in claim 1 or 2, wherein the plurality of bristles or pads (415) extend radially from the support (414).

4. An aerosol provision system (101) as claimed in any of claims 1, 2 or 3, wherein the support (414) is straight, bent or curved.

5. An aerosol provision system (101) as claimed in any preceding claim, wherein the handle portion of the first part comprises an external thread and the housing (401) of the second part comprises a complimentary internal thread for securing the first and second parts together in a storage configuration.

6. An aerosol provision system (101) as claimed in any preceding claim, wherein the housing (401) of the second part houses at least a portion of the first part in a storage configuration.

7. An aerosol provision system (101) as claimed in any preceding claim, wherein the engagement mechanism enables a cover (300) of an aerosol provision device (100) to be rotated or displaced.

8. An aerosol provision system (101) as claimed in any preceding claim, wherein the engagement mechanism comprises a first protrusion (432) for engaging with a first slot or cut-out provided in a cover of an aerosol provision device (100).

9. An aerosol provision system (101) as claimed in claim 8, wherein the engagement mechanism further comprises a second protrusion having a different shape and/or dimension to the first protrusion, wherein the second protrusion is arranged to engage with a second slot or cut-out provided in the aerosol provision device (100), wherein the second slot or cut-out has a different shape and/or dimension to the first slot or cut-out.

10. An aerosol provision system (101) as claimed in any preceding claim, wherein the handle of the first part further comprises a shoulder for resting in an aperture of an aerosol provision device (100) when a cover has been removed or displaced by the engagement mechanism.

11. An aerosol provision system (101) as claimed in any preceding claim, wherein:
the plurality of bristles (415) comprise PEEK; and/or
the support (414) comprises stainless steel.

12. An aerosol provision system (101) as claimed in any preceding claim, wherein the cleaning tool (400) further comprises a third part (420), wherein the third part (420) comprises a handle (422) having a screw member (424) dependent or extending therefrom for removing an aerosol generating article (110) from an aerosol provision device (100), optionally wherein the screw member (424) comprises stainless steel.

13. An aerosol provision system (101) as claimed in claim 12, wherein:
the housing (401) of the second part is further configured to receive the third part (420) in a storage configuration; and/or
the housing (401) of the second part houses at least a portion of the third part (420) in a storage configuration.

14. A method of cleaning an aerosol provision device (100) using a cleaning tool (400) comprising a first part comprising a handle portion (410) having a support (414) depending or extending therefrom and a plurality of bristles or pads (415) depending or extending from a distal end (416) of the support (414), and a second part comprising a housing (401) for receiving the first part, wherein the housing (401) further comprises an engagement mechanism (430) for engaging with a cover (300) of an aerosol provision device (100) in order to remove or displace the cover (300), the method comprising:
engaging the engagement mechanism (430) of the cleaning tool (400) with a cover (300) of an aerosol provision device (100) in order to remove or displace the cover (300);
inserting the plurality of bristles or pads (415) of the first part of the cleaning tool (400) into a receptacle of the aerosol provision device (100); and
translating the handle portion (410) of the first part between first and second positions along a longitudinal axis of the aerosol provision device (100).

15. A method of cleaning an aerosol provision device (100) as claimed in claim 14, further comprising:
moving the handle portion (410) of the first part between the first and second positions a plurality of times; and/or
rotating the handle portion of the first part about the longitudinal axis of the aerosol provision device (100) by at least a partial rotation.

## Patentansprüche

1. Aerosolbereitstellungssystem (101), umfassend:
eine Aerosolbereitstellungsvorrichtung (100), die eine Abdeckung (300) umfasst; und
ein Reinigungswerkzeug (400) zum Reinigen einer Aerosolbereitstellungsvorrichtung (100), wobei das Reinigungswerkzeug (400) umfasst:
einen ersten Teil, der einen Griffabschnitt (410) umfasst, der einen Träger (414) aufweist, der davon absteht oder sich daraus erstreckt, und eine Vielzahl von Borsten oder Pads (415), die von einem distalen Ende (416) des Trägers (414) abstehen oder sich daraus erstrecken; und
einen zweiten Teil, der ein Gehäuse (401) zum Aufnehmen des ersten Teils umfasst, **dadurch gekennzeichnet, dass**:
das Gehäuse (401) weiter einen Eingriffsmechanismus (430) zum Eingriff in die Abdeckung (300) der Aerosolbereitstellungsvorrichtung (100) umfasst, um die Abdeckung (300) zu entfernen oder zu verschieben; und
der Eingriffsmechanismus (430) des zweiten Teils des Reinigungswerkzeugs (400) angeordnet ist, um im Gebrauch in Eingriff mit der Abdeckung (300) zu kommen, um die Abdeckung (300) zu entfernen oder zu verschieben.

2. Aerosolbereitstellungssystem (101) nach Anspruch 1, wobei der Träger (414) aus mindestens zwei Drahtsträngen gebildet ist, die miteinander verdrillt sind, um die Vielzahl von Borsten oder Pads (415) in Position zu sichern.

3. Aerosolbereitstellungssystem (101) nach Anspruch 1 oder 2, wobei sich die Vielzahl von Borsten oder Pads (415) radial von dem Träger (414) erstreckt.

4. Aerosolbereitstellungssystem (101) nach einem der Ansprüche 1, 2 oder 3, wobei der Träger (414) gerade, gebogen oder gekrümmt ist.

5. Aerosolbereitstellungssystem (101) nach einem vorstehenden Anspruch, wobei der Griffabschnitt des ersten Teils ein Außengewinde umfasst und das Gehäuse (401) des zweiten Teils ein komplementäres Innengewinde zum Verbinden des ersten und zweiten Teils miteinander in einer Aufbewahrungsanordnung umfasst.

6. Aerosolbereitstellungssystem (101) nach einem vorstehenden Anspruch, wobei das Gehäuse (401) des zweiten Teils mindestens einen Abschnitt des ersten Teils in einer Aufbewahrungsanordnung unterbringt.

7. Aerosolbereitstellungssystem (101) nach einem vorstehenden Anspruch, wobei der Eingriffsmechanismus es einer Abdeckung (300) einer Aerosolbereitstellungsvorrichtung (100) ermöglicht, gedreht oder verschoben zu werden.

8. Aerosolbereitstellungssystem (101) nach einem vorstehenden Anspruch, wobei der Eingriffsmechanismus einen ersten Vorsprung (432) zum Eingriff in einen ersten Schlitz oder Ausschnitt umfasst, der in einer Abdeckung einer Aerosolbereitstellungsvorrichtung (100) vorgesehen ist.

9. Aerosolbereitstellungssystem (101) nach Anspruch 8, wobei der Eingriffsmechanismus weiter einen zweiten Vorsprung umfasst, der eine andere Form und/oder Abmessung als der erste Vorsprung aufweist, wobei der zweite Vorsprung angeordnet ist, um mit einem zweiten Schlitz oder Ausschnitt in Eingriff zu kommen, der in der Aerosolbereitstellungsvorrichtung (100) vorgesehen ist, wobei der zweite Schlitz oder Ausschnitt eine andere Form und/oder Abmessung als der erste Schlitz oder Ausschnitt aufweist.

10. Aerosolbereitstellungssystem (101) nach einem vorstehenden Anspruch, wobei der Griff des ersten Teils ferner eine Schulter zum Aufliegen in einer Öffnung einer Aerosolbereitstellungsvorrichtung (100) umfasst, wenn eine Abdeckung durch den Eingriffsmechanismus entfernt oder verschoben worden ist.

11. Aerosolbereitstellungssystem (101) nach einem vorstehenden Anspruch, wobei:
die Vielzahl von Borsten (415) PEEK umfasst; und/oder
der Träger (414) rostfreien Stahl umfasst.

12. Aerosolbereitstellungssystem (101) nach einem vorstehenden Anspruch, wobei das Reinigungswerkzeug (400) weiter einen dritten Teil (420) umfasst, wobei der dritte Teil (420) einen Griff (422) umfasst, der ein Schraubelement (424) aufweist, das davon absteht oder sich daraus erstreckt, zum Entfernen eines Aerosol erzeugenden Artikels (110) aus einer Aerosolbereitstellungsvorrichtung (100), wobei das Schraubelement (424) optional rostfreien Stahl umfasst.

13. Aerosolbereitstellungssystem (101) nach Anspruch 12, wobei:
das Gehäuse (401) des zweiten Teils weiter ausgebildet ist, um den dritten Teil (420) in einer Aufbewahrungsanordnung aufzunehmen; und/oder
das Gehäuse (401) des zweiten Teils mindestens einen Abschnitt des dritten Teils (420) in einer Aufbewahrungsanordnung unterbringt.

14. Verfahren zum Reinigen einer Aerosolbereitstellungsvorrichtung (100) unter Verwendung eines Reinigungswerkzeugs (400), das einen ersten Teil umfasst, der einen Griffabschnitt (410) umfasst, der einen Träger (414) aufweist, der davon absteht oder sich daraus erstreckt, und eine Vielzahl von Borsten oder Pads (415), die von einem distalen Ende (416) des Trägers (414) abstehen oder sich davon erstrecken, und einen zweiten Teil, der ein Gehäuse (401) zum Aufnehmen des ersten Teils umfasst,
wobei das Gehäuse (401) weiter einen Eingriffsmechanismus (430) zum Eingriff in eine Abdeckung (300) einer Aerosolbereitstellungsvorrichtung (100) umfasst, um die Abdeckung (300) zu entfernen oder zu verschieben, wobei das Verfahren umfasst:
Eingriff des Eingriffsmechanismus (430) des Reinigungswerkzeugs (400) in eine Abdeckung (300) einer Aerosolbereitstellungsvorrichtung (100), um die Abdeckung (300) zu entfernen oder zu verschieben;
Einführen der Vielzahl von Borsten oder Pads (415) des ersten Teils des Reinigungswerkzeugs (400) in eine Aufnahme der Aerosolbereitstellungsvorrichtung (100);
und Verschieben des Griffabschnitts (410) des ersten Teils zwischen einer ersten und zweiten Position entlang einer Längsachse der Aerosolbereitstellungsvorrichtung (100).

15. Verfahren zum Reinigen einer Aerosolbereitstellungsvorrichtung (100) nach Anspruch 14, weiter umfassend:
Bewegen des Griffabschnitts (410) des ersten Teils zwischen der ersten und zweiten Position eine Vielzahl von Malen; und/oder
Drehen des Griffabschnitts des ersten Teils um die Längsachse der Aerosolbereitstellungsvorrichtung (100) um mindestens eine Teilumdrehung.

## Revendications

1. Système (101) de fourniture d'aérosol comprenant :
un dispositif (100) de fourniture d'aérosol comprenant un couvercle (300) ; et
un outil de nettoyage (400) pour nettoyer un dispositif (100) de fourniture d'aérosol, l'outil de nettoyage (400) comprenant :
une première partie comprenant une portion de poignée (410) présentant un support (414) dépendant de celui-ci ou s'étendant à partir de celui-ci et une pluralité de poils ou tampons (415) dépendant de celui-ci ou s'étendant à partir de celui-ci depuis une extrémité distale (416) du support (414) ; et
une deuxième partie comprenant un boîtier (401) pour recevoir la première partie, **caractérisé en ce que** :
le boîtier (401) comprend en outre un mécanisme (430) de mise en prise pour venir en prise avec le couvercle (300) du dispositif (100) de fourniture d'aérosol afin de retirer ou déplacer le couvercle (300) ; et
le mécanisme (430) de mise en prise de la deuxième partie de l'outil de nettoyage (400) est agencé pour venir en prise avec le couvercle (300) en utilisation afin de retirer ou déplacer le couvercle (300).

2. Système (101) de fourniture d'aérosol selon la revendication 1, dans lequel le support (414) est formé à partir d'au moins deux brins de fil qui sont torsadés ensemble afin de fixer la pluralité de poils ou tampons (415) en position.

3. Système (101) de fourniture d'aérosol selon la revendication 1 ou la revendication 2, dans lequel la pluralité de poils ou tampons (415) s'étendent radialement à partir du support (414).

4. Système (101) de fourniture d'aérosol selon l'une quelconque des revendications 1, 2 ou 3, dans lequel le support (414) est droit, coudé ou incurvé.

5. Système (101) de fourniture d'aérosol selon une quelconque revendication précédente, dans lequel la portion de poignée de la première partie comprend un filetage externe et le boîtier (401) de la deuxième partie comprend un filetage interne complémentaire pour fixer ensemble les première et deuxième parties dans une configuration de stockage.

6. Système (101) de fourniture d'aérosol selon une quelconque revendication précédente, dans lequel le boîtier (401) de la deuxième partie loge au moins une portion de la première partie dans une configuration de stockage.

7. Système (101) de fourniture d'aérosol selon une quelconque revendication précédente, dans lequel le mécanisme de mise en prise permet à un couvercle (300) d'un dispositif (100) de fourniture d'aérosol d'être tourné ou déplacé.

8. Système (101) de fourniture d'aérosol selon une quelconque revendication précédente, dans lequel le mécanisme de mise en prise comprend une première saillie (432) pour venir en prise avec une première fente ou échancrure prévue dans un couvercle d'un dispositif (100) de fourniture d'aérosol.

9. Système (101) de fourniture d'aérosol selon la revendication 8, dans lequel le mécanisme de mise en prise comprend en outre une deuxième saillie présentant une forme et/ou une dimension différente de la première saillie, dans lequel la deuxième saillie est agencée pour venir en prise avec une deuxième fente ou échancrure prévue dans le dispositif (100) de fourniture d'aérosol, dans lequel la deuxième fente ou échancrure présente une forme et/ou une dimension différente de la première fente ou échancrure.

10. Système (101) de fourniture d'aérosol selon une quelconque revendication précédente, dans lequel la poignée de la première partie comprend en outre un épaulement pour reposer dans une ouverture d'un dispositif (100) de fourniture d'aérosol lorsqu'un couvercle a été retiré ou déplacé par le mécanisme de mise en prise.

11. Système (101) de fourniture d'aérosol selon une quelconque revendication précédente, dans lequel :
la pluralité de poils (415) comprennent du PEEK ; et/ou
le support (414) comprend de l'acier inoxydable.

12. Système (101) de fourniture d'aérosol selon une quelconque revendication précédente, dans lequel l'outil de nettoyage (400) comprend en outre une troisième partie (420), dans lequel la troisième partie (420) comprend une poignée (422) présentant un élément de vis (424) dépendant de celui-ci ou s'étendant à partir de celui-ci pour retirer un article (110) de génération d'aérosol d'un dispositif (100) de fourniture d'aérosol, éventuellement dans lequel l'élément de vis (424) comprend de l'acier inoxydable.

13. Système (101) de fourniture d'aérosol selon la revendication 12, dans lequel :
le boîtier (401) de la deuxième partie est en outre configuré pour recevoir la troisième partie (420) dans une configuration de stockage ; et/ou
le boîtier (401) de la deuxième partie loge au moins une portion de la troisième partie (420) dans une configuration de stockage.

14. Procédé de nettoyage d'un dispositif (100) de fourniture d'aérosol utilisant un outil de nettoyage (400) comprenant une première partie comprenant une portion de poignée (410) présentant un support (414) dépendant de celui-ci ou s'étendant à partir de celui-ci et une pluralité de poils ou tampons (415) dépendant de celui-ci ou s'étendant à partir de celui-ci depuis une extrémité distale (416) du support (414), et une deuxième partie comprenant un boîtier (401) pour recevoir la première partie, dans lequel le boîtier (401) comprend en outre un mécanisme (430) de mise en prise pour venir en prise avec un couvercle (300) d'un dispositif (100) de fourniture d'aérosol afin de retirer ou déplacer le couvercle (300), le procédé comprenant :
la mise en prise du mécanisme (430) de mise en prise de l'outil de nettoyage (400) avec un couvercle (300) d'un dispositif (100) de fourniture d'aérosol afin de retirer ou déplacer le couvercle (300) ;
l'insertion de la pluralité de poils ou tampons (415) de la première partie de l'outil de nettoyage (400) dans un réceptacle du dispositif (100) de fourniture d'aérosol ; et
le déplacement en translation de la portion de poignée (410) de la première partie entre des première et deuxième positions le long d'un axe longitudinal du dispositif (100) de fourniture d'aérosol.

15. Procédé de nettoyage d'un dispositif (100) de fourniture d'aérosol selon la revendication 14, comprenant en outre :
le déplacement de la portion de poignée (410) de la première partie entre les première et deuxième positions une pluralité de fois ; et/ou
la rotation de la portion de poignée de la première partie autour de l'axe longitudinal du dispositif (100) de fourniture d'aérosol d'au moins une rotation partielle.
